# FASCICULE DE BREVET EUROPEEN

(11) **EP 3 611 013 B1**
(45) Date de publication et mention de la délivrance du brevet: **19.05.2021**
(21) Numéro de dépôt: 19189522.6
(22) Date de dépôt: 01.08.2019
(51) Int. Cl.: B29D 12/02

(54) **PROCÉDÉ DE FABRICATION DE BRANCHES DE LUNETTES**
HERSTELLUNGSVERFAHREN VON BRILLENBÜGELN
METHOD FOR PRODUCING SPECTACLE ARMS

(30) Priorité: 13.08.2018 FR 1857467
(43) Date de publication de la demande: 19.02.2020
(73) Titulaire: Killine Optical Ltd, Macao (MO)
(72) Inventeur: GARDAZ, François, Macao (MO); JACQUIER, Hervé François Serge, 1300-085 Lisbonne (PT); LEFEBVRE, Marc, René, André, Louis, Macao (MO)
(74) Mandataire: Chevalier, Renaud Philippe

(56) Documents cités:
- DE-A1- 2 342 314
- FR-A1- 2 497 476
- KR-A- 20160 037 504
- US-A- 1 825 427

## Description

La présente invention se rapporte à un procédé de fabrication de branches de lunettes.

Elle se rapporte plus particulièrement à un procédé de fabrication de branches de lunettes comprenant des inserts longilignes, notamment métalliques, entourés de garnitures extérieures, notamment en bois stratifié.

Dans le domaine des lunettes, il est connu d'employer des plaques de couverture, et notamment des plaques de couverture stratifiées, qui viennent enserrer les inserts longilignes pour former les garnitures extérieures.

Cependant, il est difficile industriellement d'obtenir des plaques de couverture ajustées autour des inserts longilignes et de formes précises et maîtrisées . Le document FR 2 497 476 A1 décrit un procédé de fabrication de branches de lunettes comprenant la réalisation d'une plaque dans laquelle sont noyés plusieurs inserts longilignes s'étendant parallèlement et de manière espacée les uns à la suite des autres et présentant des extrémités avant et arrière respectives.

La présente invention a notamment pour but de proposer un procédé de fabrication de branches de lunettes qui garantisse un ajustement précis des plaques de couverture autour des inserts longilignes, ainsi qu'une mise en forme précise des plaques de couverture qui formeront les garnitures extérieures.

A cet effet, elle propose un procédé de fabrication de branches de lunettes, comprenant les étapes suivantes :
- rainurage d'une face interne d'une première plaque de couverture, de sorte à ménager plusieurs rainures dans ladite face interne s'étendant parallèlement et de manière espacée les unes à la suite des autres ;
- fourniture d'un gabarit comprenant :
   - plusieurs inserts longilignes s'étendant parallèlement et de manière espacée les uns à la suite des autres et présentant des extrémités avant et arrière respectives ;
   - un pont avant rejoignant les extrémités avant de tous les inserts longilignes et présentant des moyens d'indexage avant disposés entre les inserts longilignes ;
   - un pont arrière rejoignant les extrémités arrière de tous les inserts longilignes et présentant des moyens d'indexage arrière disposés entre les inserts longilignes ;
- mise en place du gabarit sur la face interne de la première plaque de couverture, de sorte que tous les inserts longilignes sont disposés à l'intérieur des rainures et que les ponts avant et arrière dépassent de la première plaque de couverture ;
- plaquage et encollage d'une seconde plaque de couverture sur la face interne de la première plaque de couverture, de sorte que les inserts longilignes soient insérés entre la première plaque de couverture et la seconde plaque de couverture et que les ponts avant et arrière dépassent de la première plaque de couverture et de la seconde plaque de couverture ;
- découpage de la première plaque de couverture et de la seconde plaque de couverture au moyen d'un outil de découpe autour des inserts longilignes afin de former des branches de lunettes, dans lequel l'outil de découpe, préalablement au découpage autour d'un insert longiligne, est positionné et maintenu en place vis-à-vis dudit insert longiligne en coopérant avec des moyens d'indexage avant et des moyens d'indexage arrière adjacents audit insert longiligne.

Ainsi, grâce à ce procédé, les plaques de couverture sont ajustées autour des inserts longilignes grâce aux rainures et sont découpées de manière précise grâce aux moyens d'indexage avant et arrière qui garantissent une découpe centrée autour des inserts longilignes.

Selon une caractéristique, les moyens d'indexage avant et les moyens d'indexage arrière sont formés de trous ou d'encoches, et l'outil de découpe, préalablement au découpage autour d'un insert longiligne, est positionné et maintenu en place vis-à-vis dudit insert longiligne au moyen de pions engagés dans les trous ou encoches formant les moyens d'indexage avant et les moyens d'indexage arrière adjacents audit insert longiligne.

Selon une autre caractéristique, le procédé comprend une étape de fabrication de la première plaque de couverture par empilement et encollage d'au moins deux couches de matériau afin d'obtenir une première plaque de couverture stratifiée.

Dans une réalisation particulière, les couches de matériau de la première plaque de couverture sont des couches de bois.

En variante, la première plaque de couverture est formée d'une simple couche de matériau, et notamment d'une simple couche de bois.

Selon une première possibilité de l'invention, la seconde plaque de couverture est formée d'une simple couche de matériau, et notamment d'une simple couche de matériau formée dans un même matériau que l'une des couches de matériau de la première plaque de couverture.

Selon une seconde possibilité de l'invention, le procédé comprend une étape de fabrication de la seconde plaque de couverture par empilement et encollage d'au moins deux couches de matériau afin d'obtenir une seconde plaque de couverture stratifiée.

Avantageusement, les couches de matériau de la première plaque de couverture stratifiée sont formées dans un même matériau que les couches de matériau de la seconde plaque de couverture stratifiée.

Selon une possibilité, les inserts longilignes ne saillent pas de la face interne de la première plaque de couverture, et la seconde plaque de couverture est plane.

Selon une variante, les inserts longilignes saillent de la face interne de la première plaque de couverture, et la seconde plaque de couverture est également pourvues de rainures pour les inserts longilignes.

Dans un mode de réalisation particulier, dans le gabarit, les inserts longilignes sont prolongés par des tiges arrière, au-delà du pont arrière, de sorte que lesdites tiges arrière dépassent de la première plaque de couverture et de la seconde plaque de couverture après l'étape de plaquage et d'encollage de la seconde plaque de couverture ; de telles tiges arrière formant ultérieurement les tiges arrière des branches de lunettes propres à être recourbées et à venir en appui sur les oreilles des porteurs.

Conformément à une autre caractéristique avantageuse de l'invention, le gabarit est intégralement métallique.

La présente invention concerne également la caractéristique selon laquelle le procédé comprend une étape de sectionnement du pont avant et du pont arrière, entre les inserts longilignes, afin de désolidariser les branches de lunettes entre elles.

D'autres caractéristiques et avantages de la présente invention apparaîtront à la lecture de la description détaillée ci-après, d'un exemple de mise en œuvre non limitatif, faite en référence aux figures annexées dans lesquelles :
- les figures 1 à 9 illustrent schématiquement des étapes successives d'un procédé de fabrication de branches de lunettes selon l'invention ; et
- la figure 10 illustre schématiquement une branche de lunettes seule issue d'un procédé de fabrication de branches de lunettes selon l'invention.

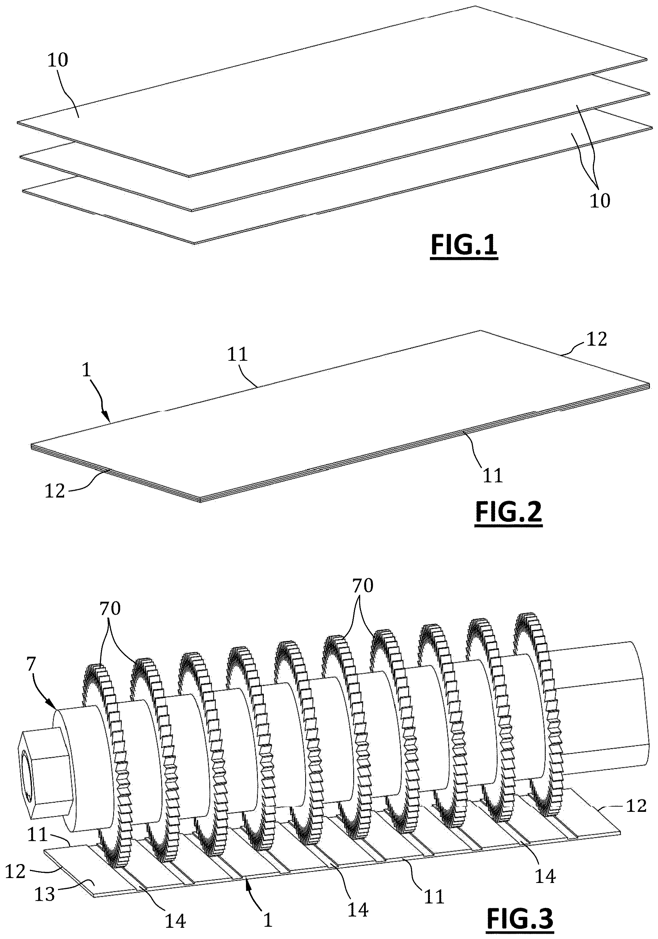

Dans une première étape illustrée schématiquement sur les figures 1 et 2, le procédé comprend une étape de fabrication d'une première plaque de couverture 1 par empilement et encollage d'au moins deux couches de matériau 10 afin d'obtenir une première plaque de couverture 1 stratifiée.

Dans l'exemple illustré, les couches de matériau 10 sont au nombre de trois, sans que ce soit limitatif de l'invention. Par ailleurs, dans une réalisation favorite mais non limitative, les couches de matériau 10 sont en bois afin de former une première plaque de couverture 1 en bois stratifiée. Il est tout de même envisageable d'employer d'autres types de matériau, tels que des matériaux plastique ou polymérique, des matériaux naturels comme la corne.

La première plaque de couverture 1 est de forme générale rectangulaire et présente deux bords longitudinaux 11 opposés dans le sens de la longueur, et deux bords transversaux 12 opposés dans le sens de la largeur.

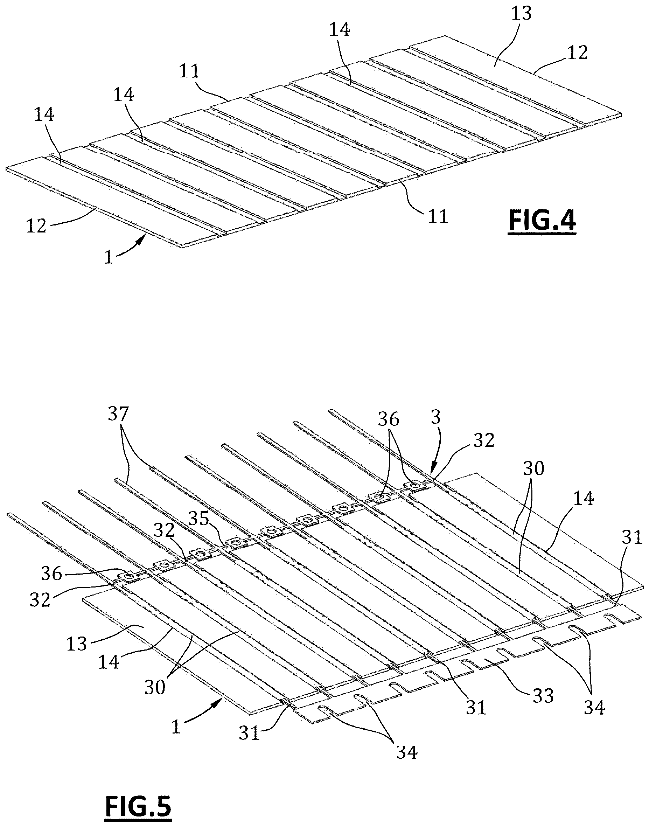

Dans une deuxième étape illustrée schématiquement sur les figures 3 et 4, le procédé comprend une étape de rainurage d'une face interne 13 de la première plaque de couverture 1, de sorte à ménager plusieurs rainures 14 dans cette face interne 13 s'étendant parallèlement aux bords transversaux 12 et de manière espacée les unes à la suite des autres. Ces rainures 14 s'étendent sur toute la largeur de la première plaque de couverture 1, d'un bord longitudinal 11 à l'autre bord longitudinal 11.

Comme visible en figure 3, ce rainurage peut être effectué au moyen d'une rainureuse 7 rotative munie de plusieurs roues de rainurage 70 dentées et disposées les unes à la suite de l'autre le long de l'axe de pivotement ; chaque roue de rainurage 70 réalisant une rainure 14 de sorte que toutes les rainures 14 sont réalisées en une seule passe.

Dans une troisième étape illustrée schématiquement sur la figure 5, le procédé comprend une étape de fourniture d'un gabarit 3 et de mise en place du gabarit 3 sur la face interne 13 de la première plaque de couverture 1.

Le gabarit 3 est formé d'une pièce intégralement métallique d'un seul tenant, ou monobloc, et ce gabarit comprend :
- plusieurs inserts longilignes 30 s'étendant parallèlement et de manière espacée les uns à la suite des autres et présentant des extrémités avant 31 et des extrémités arrière 32 respectives ;
- un pont avant 33 rejoignant les extrémités avant 31 de tous les inserts longilignes 30 et présentant des moyens d'indexage avant disposés entre les inserts longilignes 30 et se présentant sous la forme d'encoches 34 ;
- un pont arrière 35 rejoignant les extrémités arrière 32 de tous les inserts longilignes 30 et présentant des moyens d'indexage arrière disposés entre les inserts longilignes 30 et se présentant sous la forme de trous 36 ;
- des tiges arrière 37 prolongeant les inserts longilignes 30 au-delà du pont arrière 35 et de leurs extrémités arrière 32.

Le gabarit 3 est donc mis en place sur la face interne 13 de la première plaque de couverture 1, de sorte que tous les inserts longilignes 30 sont disposés à l'intérieur des rainures 14 et que les ponts avant et arrière 33, 35 dépassent de la première plaque de couverture 10, et plus précisément le pont avant 33 dépasse d'un bord longitudinal 11 tandis que le pont arrière 35 dépasse de l'autre bord longitudinal 11. Il est à noter que les tiges arrière 37 dépassent également de la première plaque de couverture 10. Les rainures 14 présentent une profondeur sensiblement équivalente à l'épaisseur des inserts longilignes 30 de sorte que les inserts longilignes 30 ne saillent pas de la face interne 13 de la première plaque de couverture 1, à un jeu de montage près.

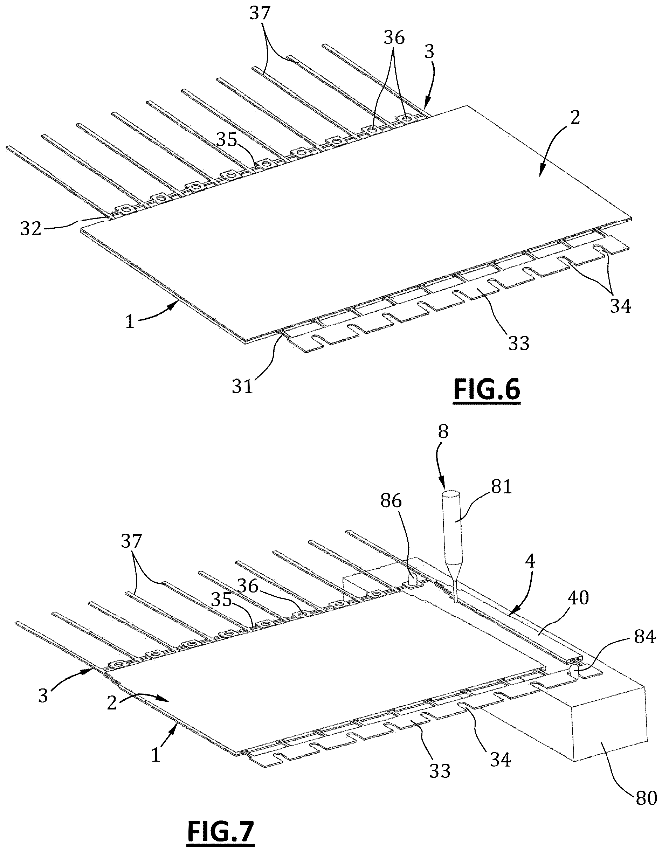

Dans une quatrième étape illustrée schématiquement sur la figure 6, le procédé comprend une étape de plaquage et encollage d'une seconde plaque de couverture 2 sur la face interne 13 de la première plaque de couverture 1, de sorte que :
- les inserts longilignes 30 soient insérés entre la première plaque de couverture 1 et la seconde plaque de couverture 2 ;
- les extrémités avant et arrière 31, 32 des inserts longilignes 30 dépassent de la première plaque de couverture 1 et de la seconde plaque de couverture 2 ; et donc
- les ponts avant et arrière 33, 35 dépassent de la première plaque de couverture 1 et de la seconde plaque de couverture 2, et aussi les tiges arrière 37 dépassent de la première plaque de couverture 1 et de la seconde plaque de couverture 2.

La seconde plaque de couverture 2 est de forme générale rectangulaire avec la même longueur et la même largeur que la première plaque de couverture 1, et elle est plaquée et encollée sur la première plaque de couverture 1 de manière ajustée ou coïncidente. La seconde plaque de couverture 2 est formée d'une simple couche de matériau. Par ailleurs, dans une réalisation favorite mais non limitative, cette couche de matériau est en bois afin de former avec la première plaque de couverture 1 une garniture extérieure de branche en bois stratifiée. Il est tout de même envisageable d'employer pour cette couche de matériau d'autres types de matériau, tels que des matériaux plastique ou polymérique, des matériaux naturels comme la corne.

En variante, la seconde plaque de couverture 2 est formée par empilement et encollage d'au moins deux couches de matériau afin d'obtenir une seconde plaque de couverture 2 stratifiée, et également afin de former avec la première plaque de couverture 1 une garniture extérieure de branche en bois stratifiée. Il est tout de même envisageable d'employer pour les couches de matériau de cette seconde plaque de couverture 2 d'autres types de matériau, tels que des matériaux plastique ou polymérique, des matériaux naturels comme la corne.

Ainsi, à l'issue de la quatrième étape, les inserts longilignes 30 sont intercalés entre la première plaque de couverture 1 et la seconde plaque de couverture 2, à l'intérieur des rainures 14 ; ces deux plaques de couverture 1, 2 étant encollées ensemble.

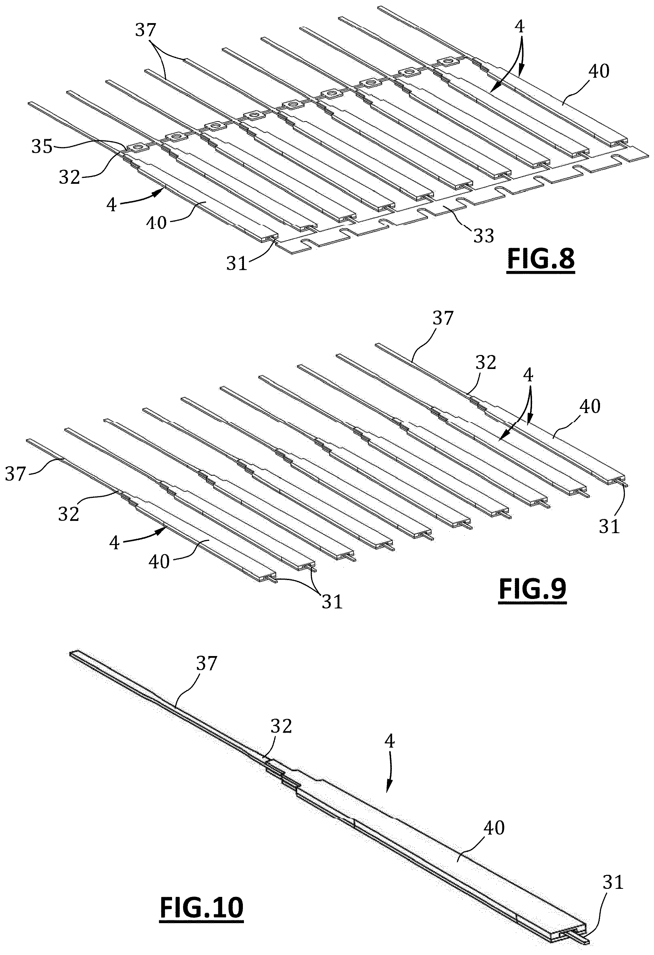

Dans une cinquième étape illustrée schématiquement sur les figures 7 et 8, le procédé comprend une étape de découpage de la première plaque de couverture 1 et de la seconde plaque de couverture 2 au moyen d'un outil de découpe 8 autour des inserts longilignes 30 afin de former des branches de lunettes 4. L'outil de découpe 8 comprend un châssis 80 muni de pions d'indexage 84, 86, à savoir un pion d'indexage avant 84 et un pion d'indexage arrière 86, et également une découpeuse 81 telle qu'une scie, un fil de découpe, un jet pulsé, ... propre à découper les couches formant les deux plaques de couverture 1, 2 assemblées.

Dans cette cinquième étape, l'outil de découpe 8 effectue les découpes branche de lunettes 4 par branche de lunettes 4, autrement dit en effectuant des découpes autour d'un insert longitudinal 30, puis en étant déplacé pour effectuer des découpes autour d'un insert longitudinal 30 suivant, et ainsi de suite jusqu'au dernier insert longitudinal 30.

Préalablement au découpage autour d'un insert longiligne 30, l'outil de découpe 8 est positionné et maintenu en place vis-à-vis de cet insert longiligne 30 en coopérant à la fois avec une encoche 34 du pont avant 33 formant un moyen d'indexage avant et avec un trou 36 du pont arrière 35 formant un moyen d'indexage arrière ; où l'encoche 34 et le trou 36 sont adjacents à l'insert longiligne 30.

A cet effet, l'outil de découpe 8 est positionné et maintenu en place vis-à-vis de cet insert longiligne au moyen de son pion d'indexage avant 84 qui est engagé dans une encoche 34 du pont avant 33 et au moyen de son pion d'indexage arrière 86 qui est engagé dans un trou 36 du pont arrière 35. De cette manière, grâce à cet indexage et à ce maintien précis en position de l'outil de découpe 8, les découpes autour des inserts longilignes 30 seront précises et nettes.

A l'issue de cette cinquième étape, on obtient des branches de lunettes 4 comprenant des inserts longilignes 30 entourés de garnitures extérieures 40, où :
- ces garnitures extérieures 40 sont formées des parties découpées des deux plaques de couverture 1, 2 encollées,
- les inserts longilignes 30 présentent des extrémités avant 31 dépassant des garnitures extérieures 40 et sur lesquelles seront fixées des charnières pour articuler des montures ;
- les inserts longilignes 30 présentent des extrémités arrière 32 dépassant des garnitures extérieures 40 et prolongées par les tiges arrière 37 propres à être recourbées et à venir en appui sur les oreilles des porteurs en situation.

A l'issue de cette cinquième étape, les branches de lunettes 4 sont reliées entre elles au moyen des ponts avant et arrière 33, 35.

Dans une sixième étape illustrée schématiquement sur la figure 9, le procédé comprend une étape de sectionnement du pont avant 33 et du pont arrière 35 entre les inserts longilignes 30, autrement dit un sectionnement du pont avant 33 entre les entre les extrémités avant 31 des inserts longilignes 30 et un sectionnement du pont arrière 35 entre les extrémités arrière 32 des inserts longilignes 30, afin de désolidariser les branches de lunettes 4 entre elles.

A l'issue de cette sixième étape, les branches de lunettes 4 sont désolidarisées et donc indépendantes, la figure 10 illustrant une branche de lunettes 10 seule.

## Revendications

1. Procédé de fabrication de branches de lunettes (4), comprenant les étapes suivantes :
- rainurage d'une face interne (13) d'une première plaque de couverture (1), de sorte à ménager plusieurs rainures (14) dans ladite face interne (13) s'étendant parallèlement et de manière espacée les unes à la suite des autres ;
- fourniture d'un gabarit (3) comprenant :
- plusieurs inserts longilignes (30) s'étendant parallèlement et de manière espacée les uns à la suite des autres et présentant des extrémités avant (31) et arrière (31, 32) respectives ;
- un pont avant (33) rejoignant les extrémités avant (31) de tous les inserts longilignes (30) et présentant des moyens d'indexage avant (34) disposés entre les inserts longilignes (30) ;
- un pont arrière (35) rejoignant les extrémités arrière (32) de tous les inserts longilignes (30) et présentant des moyens d'indexage arrière (36) disposés entre les inserts longilignes (30) ;
- mise en place du gabarit (3) sur la face interne (13) de la première plaque de couverture (1), de sorte que tous les inserts longilignes (30) sont disposés à l'intérieur des rainures (14) et que les ponts avant et arrière (33, 35) dépassent de la première plaque de couverture (1) ;
- plaquage et encollage d'une seconde plaque de couverture (2) sur la face interne (13) de la première plaque de couverture (1), de sorte que les inserts longilignes (30) soient insérés entre la première plaque de couverture (1) et la seconde plaque de couverture (2) et que les ponts avant et arrière (33, 35) dépassent de la première plaque de couverture (1) et de la seconde plaque de couverture (2) ;
- découpage de la première plaque de couverture (1) et de la seconde plaque de couverture (2) au moyen d'un outil de découpe (8) autour des inserts longilignes (30) afin de former des branches de lunettes (4), dans lequel l'outil de découpe (8), préalablement au découpage autour d'un insert longiligne (30), est positionné et maintenu en place vis-à-vis dudit insert longiligne (30) en coopérant avec des moyens d'indexage avant (34) et des moyens d'indexage arrière (36) adjacents audit insert longiligne (30).

2. Procédé de fabrication de branches de lunettes (4) selon la revendication 1, dans lequel les moyens d'indexage avant (34) et les moyens d'indexage arrière (36) sont formés de trous ou d'encoches, et l'outil de découpe (8), préalablement au découpage autour d'un insert longiligne (30), est positionné et maintenu en place vis-à-vis dudit insert longiligne (30) au moyen de pions (84, 86) engagés dans les trous (36) ou encoches (34) formant les moyens d'indexage avant et les moyens d'indexage arrière adjacents audit insert longiligne (30).

3. Procédé de fabrication de branches de lunettes (4) selon l'une quelconque des revendications précédentes, comprenant une étape de fabrication de la première plaque de couverture (1) par empilement et encollage d'au moins deux couches de matériau (10) afin d'obtenir une première plaque de couverture (1) stratifiée.

4. Procédé de fabrication de branches de lunettes (4) selon la revendication précédente, dans lequel les couches de matériau (10) de la première plaque de couverture (1) sont des couches de bois.

5. Procédé de fabrication de branches de lunettes (4) selon l'une quelconque des revendications 3 et 4, dans lequel la seconde plaque de couverture (2) est formée d'une simple couche de matériau.

6. Procédé de fabrication de branches de lunettes (4) selon la revendication précédente, dans lequel la couche de matériau de la seconde plaque de couverture (2) est formée dans un même matériau que l'une des couches de matériau de la première plaque de couverture (1).

7. Procédé de fabrication de branches de lunettes (4) selon l'une quelconque des revendications 1 à 4, comprenant une étape de fabrication de la seconde plaque de couverture (2) par empilement et encollage d'au moins deux couches de matériau afin d'obtenir une seconde plaque de couverture (2) stratifiée.

8. Procédé de fabrication de branches de lunettes (4) selon les revendications 3 et 7, dans lequel les couches de matériau de la première plaque de couverture (1) stratifiée sont formées dans un même matériau que les couches de matériau de la seconde plaque de couverture (2) stratifiée.

9. Procédé de fabrication de branches de lunettes (4) selon l'une quelconque des revendications précédentes, dans lequel, dans le gabarit (3), les inserts longilignes (30) sont prolongés par des tiges arrière (37), au-delà du pont arrière (35), de sorte que lesdites tiges arrière (37) dépassent de la première plaque de couverture (1) et de la seconde plaque de couverture (2) après l'étape de plaquage et d'encollage de la seconde plaque de couverture (2).

10. Procédé de fabrication de branches de lunettes (4) selon l'une quelconque des revendications précédentes, dans lequel le gabarit (3) est intégralement métallique.

11. Procédé de fabrication de branches de lunettes (4) selon l'une quelconque des revendications précédentes, comprenant une étape de sectionnement du pont avant (33) et du pont arrière (35), entre les inserts longilignes (30), afin de désolidariser les branches de lunettes (4) entre elles.

## Patentansprüche

1. Herstellungsverfahren von Brillenbügeln (4), die folgenden Schritte umfassend:
- Rillen einer Innenseite (13) einer ersten Abdeckplatte (1), um mehrere Rillen (14) an der Innenseite (13) vorzusehen, die sich parallel und eine nach der anderen im Abstand zueinander erstrecken;
- Bereitstellen einer Schablone (3), umfassend:
- mehrere längliche Einsätze (30), die sich parallel und eine nach der anderen im Abstand zueinander erstrecken, und jeweilige vordere (31) und hintere (31, 32) Enden aufweisen;
- eine vordere Brücke (33), die auf die vorderen Enden (31) aller länglichen Einsätze (30) trifft und vordere Indexiermittel (34) aufweist, die zwischen den länglichen Einsätzen (30) angeordnet sind;
- eine hintere Brücke (35), die auf die hinteren Enden (32) aller länglichen Einsätze (30) trifft und hintere Indexiermittel (36) aufweist, die zwischen den länglichen Einsätzen (30) angeordnet sind;
- Anbringen der Schablone (3) auf der Innenseite (13) der ersten Abdeckplatte (1), sodass alle länglichen Einsätze (30) im Inneren der Rillen (14) angeordnet sind, und die vordere und hintere Brücke (33, 35) aus der ersten Abdeckplatte (1) hervorstehen;
- Plattieren und Verkleben einer zweiten Abdeckplatte (2) auf der Innenseite (13) der ersten Abdeckplatte (1), sodass die länglichen Einsätze (30) zwischen der ersten Abdeckplatte (1) und der zweiten Abdeckplatte (2) eingeführt sind und die vordere und hintere Brücke (33, 35) aus der ersten Abdeckplatte (1) und der zweiten Abdeckplatte (2) hervorstehen;
- Schneiden der ersten Abdeckplatte (1) und der zweiten Abdeckplatte (2) anhand eines Schneidwerkzeugs (8) um die länglichen Einsätze (30) herum, um Brillenbügel (4) zu bilden, wobei das Schneidwerkzeug (8) vor dem Schneiden um einen länglichen Einsatz (30) herum gegenüber dem länglichen Einsatz (30) positioniert und an Ort und Stelle gehalten wird, indem es mit den an den länglichen Einsatz (30) angrenzenden vorderen Indexiermitteln (34) und hinteren Indexiermitteln (36) zusammenwirkt.

2. Herstellungsverfahren von Brillenbügeln (4) nach Anspruch 1, wobei die vorderen Indexiermittel (34) und die hinteren Indexiermittel (36) aus Löchern oder Einkerbungen gebildet sind, und das Schneidwerkzeug (8) vor dem Schneiden um einen länglichen Einsatz (30) herum gegenüber dem länglichen Einsatz (30) anhand von Stiften (84, 86) positioniert und an Ort und Stelle gehalten wird, die in die Löcher (36) oder Einkerbungen (34) eingeführt sind, die die an den länglichen Einsatz (30) angrenzenden vorderen Indexiermittel und den hinteren Indexiermittel bilden.

3. Herstellungsverfahren von Brillenbügeln (4) nach einem der vorstehenden Ansprüche, welches einen Herstellungsschritt der ersten Abdeckplatte (1) durch Stapeln und Verkleben mindestens zweier Werkstoffschichten (10) umfasst, um eine erste geschichtete Abdeckplatte (1) zu erhalten.

4. Herstellungsverfahren von Brillenbügeln (4) nach dem vorstehenden Anspruch, wobei die Werkstoffschichten (10) der ersten Abdeckplatte (1) Schichten aus Holz sind.

5. Herstellungsverfahren von Brillenbügeln (4) nach einem der Ansprüche 3 und 4, wobei die zweite Abdeckplatte (2) aus einer einfachen Werkstoffschicht gebildet ist.

6. Herstellungsverfahren von Brillenbügeln (4) nach dem vorstehenden Anspruch, wobei die Werkstoffschicht der zweiten Abdeckplatte (2) aus einem selben Werkstoff wie die eine der Werkstoffschichten der ersten Abdeckplatte (1) gebildet ist.

7. Herstellungsverfahren von Brillenbügeln (4) nach einem der Ansprüche 1 bis 4, welches einen Herstellungsschritt der zweiten Abdeckplatte (2) durch Stapeln und Verkleben mindestens zweier Werkstoffschichten umfasst, um eine zweite geschichtete Abdeckplatte (2) zu erhalten.

8. Herstellungsverfahren von Brillenbügeln (4) nach den Ansprüchen 3 und 7, wobei die Werkstoffschichten der ersten geschichteten Abdeckplatte (1) aus einem selben Werkstoff wie die Werkstoffschichten der zweiten geschichteten Abdeckplatte (2) gebildet ist.

9. Herstellungsverfahren von Brillenbügeln (4) nach einem der vorstehenden Ansprüche, wobei die länglichen Einsätze (30) in der Schablone (3) durch hintere Stäbe (37) über die hintere Brücke (35) hinaus fortgesetzt werden, sodass die hinteren Stäbe (37) nach dem Schritt des Plattierens und Verklebens der zweiten Abdeckplatte (2) aus der ersten Abdeckplatte (1) und der zweiten Abdeckplatte (2) hervorstehen.

10. Herstellungsverfahren von Brillenbügeln (4) nach einem der vorstehenden Ansprüche, wobei die Schablone (3) vollständig aus Metall ist.

11. Herstellungsverfahren von Brillenbügeln (4) nach einem der vorstehenden Ansprüche, einen Schritt des Durchschneidens der vorderen Brücke (33) und der hinteren Brücke (35) zwischen den länglichen Einsätzen (30) umfassend, um die Brillenbügel (4) voneinander zu trennen.

## Claims

1. A method of manufacturing spectacle arms (4), comprising the following steps of:
- grooving an inner face (13) of a first cover plate (1), so as to form several grooves (14) in said inner face (13) extending parallel and spaced apart one after the other;
- providing a gauge (3) comprising:
- several longilineal inserts (30) extending parallel and spaced apart one after the other and having respective front (31) and rear (31, 32) ends;
- a front bridge (33) joining the front ends (31) of all the longilineal inserts (30) and having front indexing means (34) disposed between the longilineal inserts (30);
- a rear bridge (35) joining the rear ends (32) of all the longilineal inserts (30) and having rear indexing means (36) disposed between the longilineal inserts (30);
- setting the gauge (3) on the inner face (13) of the first cover plate (1), so that all the longilineal inserts (30) are disposed inside the grooves (14) and that the front and rear bridges (33, 35) protrude from the first cover plate (1);
- pressing and bonding a second cover plate (2) on the inner face (13) of the first cover plate (1), so that the longilineal inserts (30) are inserted between the first cover plate (1) and the second cover plate (2) and that the front and rear bridges (33, 35) protrude from the first cover plate (1) and the second cover plate (2);
- cutting the first cover plate (1) and the second cover plate (2) by means of a cutting tool (8) around the longilineal inserts (30) in order to form spectacle arms (4), wherein the cutting tool (8), prior to cutting around a longilineal insert (30), is positioned and held in place with respect to said longilineal insert (30) by cooperating with front indexing means (34) and rear indexing means (36) adjacent to said longilineal insert (30).

2. The method of manufacturing spectacle arms (4) according to claim 1, wherein the front indexing means (34) and the rear indexing means (36) are formed by holes or notches, and the cutting tool (8), prior to cutting around a longilineal insert (30), is positioned and held in place with respect to said longilineal insert (30) by means of pins (84, 86) engaged into the holes (36) or notches (34) forming the front indexing means and the rear indexing means adjacent to said longilineal insert (30).

3. The method of manufacturing spectacle arms (4) according to any one of the preceding claims, comprising a step of manufacturing the first cover plate (1) by stacking and bonding at least two layers of material (10) in order to obtain a first laminated cover plate (1).

4. The method of manufacturing spectacle arms (4) according to the preceding claim, wherein the layers of material (10) of the first cover plate (1) are wood layers.

5. The method of manufacturing spectacle arms (4) according to any one of claims 3 and 4, wherein the second cover plate (2) is formed of a single layer of material.

6. The method of manufacturing spectacle arms (4) according to the preceding claim, wherein the layer of material of the second cover plate (2) is formed of the same material as one of the layers of material of the first cover plate (1).

7. The method of manufacturing spectacle arms (4) according to any one of claims 1 to 4, comprising a step of manufacturing the second cover plate (2) by stacking and bonding at least two layers of material in order to obtain a second laminated cover plate (2).

8. The method of manufacturing spectacle arms (4) according to claims 3 and 7, wherein the material layers of the first laminated cover plate (1) are formed of the same material as the layers of material of the second laminated cover plate (2).

9. The method of manufacturing spectacle arms (4) according to any one of the preceding claims, wherein, in the gauge (3), the longilineal inserts (30) are extended by rear rods (37), beyond of the rear bridge (35), so that said rear rods (37) protrude from the first cover plate (1) and the second cover plate (2) after the step of pressing and bonding the second cover plate (2).

10. The method of manufacturing spectacle arms (4) according to any one of the preceding claims, wherein the gauge (3) is completely metallic.

11. The method of manufacturing spectacle arms (4) according to any one of the preceding claims, comprising a step of cutting the front bridge (33) and the rear bridge (35), between the longilineal inserts (30), in order to disengage the spectacle arms (4) from one another.
